# EUROPEAN PATENT SPECIFICATION

(11) **EP 0 963 228 B1**
(45) Date of publication and mention of the grant of the patent: **15.05.2002**
(21) Application number: 97903678.7
(22) Date of filing: 28.02.1997
(51) Int. Cl.: B01D 17/025, B01D 17/038, B04C 5/00

(54) **PROCESS FOR SIMULTANEOUS EXTRACTION OF DISPERSED AND DISSOLVED HYDROCARBON CONTAMINANTS FROM WATER**
VERFAHREN ZUR GLEICHZEITIGEN EXTRAKTION VON DISPERGIERTEN UND GELÖSTEN KOHLENWASSERSTOFFVERUNREINIGUNGEN AUS WASSER
PROCEDE D'EXTRACTION SIMULTANEE DE CONTAMINANTS D'HYDROCARBURES DISPERSES ET DISSOUS, A PARTIR D'EAU

(43) Date of publication of application: 15.12.1999
(73) Proprietor: Cagniard de la Tour AS, 4004 Stavanger (NO)
(72) Inventor: HENRIKSEN, Inge, Brun, N-4010 Stavanger (NO); PACE, Gary, William, Raleigh, NC 27615 (US)
(74) Representative: Cockbain, Julian, Dr.
(86) International application number: PCT/NO97/00060
(87) International publication number: WO 98/37941

(56) References cited:
- WO-A-94/13930
- US-A- 4 627 922
- US-A- 4 816 165
- US-A- 5 298 167
- US-A- 5 543 043

## Description

The present invention is a new process for simultanous extraction of dispersed and dissolved hydrocarbon contaminants from water.

The discharge of produced water in the Norwegian Sector of the North Sea is expected to increase from 15 million m³ (1991) to 110 million m³ by year 2000 (see OLF Milieprogram (environmental program), Report phase 1, section B: "Utslipp til Sje" (1991)).

Liquid-liquid hydrocyclones have been proven to be successful in handling increasing water production and in maintaining the current discharge limits for dispersed aliphatic hydrocarbons of 40 ppm. The average discharge concentration of dispersed oil in the Norwegian Sector has been relatively constant over the last years at approximately 20 ppm. However, as the existing reservoirs will be operated at higher water cuts by the year 2000, the water treatment capacity is expected to be the bottleneck in maintaining the oil production capacity for many fields in the North Sea (see OLF report (supra)).

There is a growing concern over the amount of aromatic compounds, such as benzene, toluene and xylene (BTX), naphtalene and PAH in the water phase, due to the toxic effect of these on the marine environment (see Somerville et al, "Environmental Effects of Produced Water from North Sea oil operations", Mar. Poll. Bul. 18, 10(1987) 549-558). Though no restrictions or limits to the discharge of aromatic compounds exists, it is anticipated that, when a feasible technology for its removal emerges, maximum discharge limits for aromatics will follow.

In order to counter the water treatment system bottleneck, extensive research has been conducted into the improvement of the efficiency of the hydrocyclones. This has only lead to marginal improvements of some 30-40%, over the original design as proposed by Coleman et al. in "Hydrocyclones for oil/water Separation", International Conference on Hydrocyclones, Cambridge UK (1980). The major improvement in overall separation efficiency has primarily resulted from process optimization upstream the hydrocyclones. The elimination of turbulent flow regimes generated by pumps and valves, has reduced oil drop break-up (see Meldrum N.: "Hydrocyclones: A Solution to Produced Water Treatment", OTC, Houston, Tx #5594, 383-394 (1987)) and consequently improved the (downstream) separation efficiency of the hydrocyclones. The principal components governing the separation efficiency of hydrocyclones are the density difference between the continuous phase (water) and the dispersed phase (oil) and the droplet (particle) size.

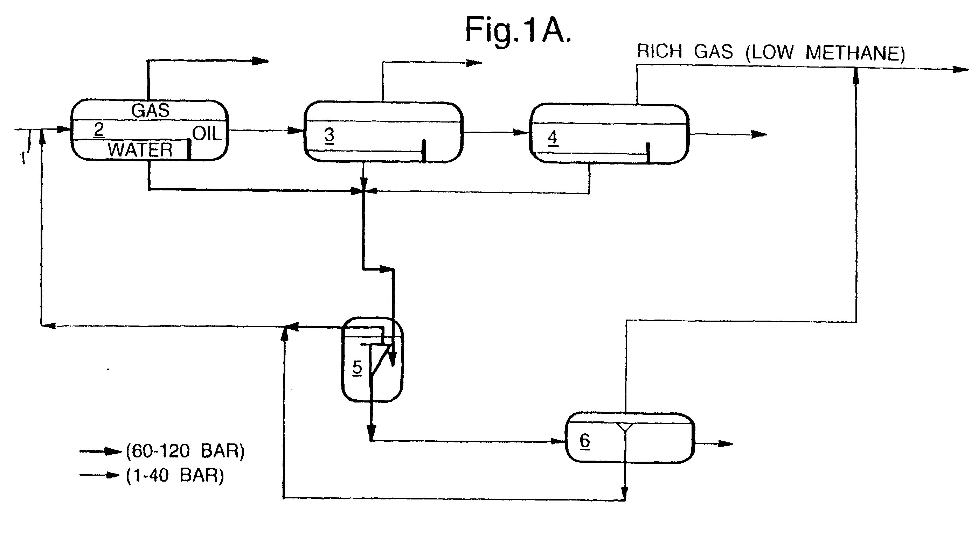

When a hydrocyclone is operated at its optimum flow rate and pressure-drop, the separation efficiency can only be improved by increasing the density difference between the two phases and by minimizing droplet break-up. Under normal operating conditions, the density difference is determined by the inherent properties of water and oil. Minimizing droplet break-up, by restricting exposure of the fluids to turbulent flow regimes, becomes a precondition for good hydrocyclone performance. This is normally achieved by housing the hydrocyclone(s) within a pressure vessel with the feed lines submerged in the liquid (see Schubert M.F., Skilbeck F. and Walter H.J.: "Liquid Hydrocyclones Separation Systems", The 4th international Conference on Hydrocyclones, Southampton, (1992)). At off-shore installations it is preferable to operate the hydrocyclone at as close to the well head pressure as possible. This provides feed pressure, and the hydrocyclone should be positioned upstream of the level control valve of the three phase separator to minimize droplet break-up, as illustrated in Fig. 1A in Schubert et al. (supra).

Hydrocyclones are the systems of choice when operated at design capacity in conjunction with a complementary flotation process at the degasser. It is, however, apparent from published data that hydrocyclones barely meet the current oil discharge limit of 40 ppm without incorporation of the downstream flotation process as provided by the degasser (see Schubert et al. (supra)).

At increasing water cuts, oil production rates are dictated by the water treatment capacity of hydrocyclones and compounded negative separation effect created by reduced residence times in the first stage separator and in the degasser. Expanding current process capacities is often cost prohibitively expensive because of weight and space limitations, since the whole process train from the first stage separator to the degasser (flotation) equipment, must be adapted.

There is an apparent evolving need for technologies to increase the produced water treatment capacity and efficiency within the weight and space constraints of existing production platforms.

Viewed from one aspect, the invention provides a method of separating dissolved and dispersed hydrocarbon contaminants in hydrocarbon-contaminated water, which method comprises the steps of: mixing into a stream of hydrocarbon-contaminated water a fluid comprising at least one hydrocarbon and having an average molecular weight of 30 to 72 g/mole; allowing said water and said fluid to separate in a liquid-liquid separator; and removing from said separator an aqueous liquid and a hydrocarbon liquid, said aqueous liquid being more dense than said hydrocarbon liquid; said method further comprising maintaining said water and said fluid within said separator at a temperature and a pressure at which said fluid and hydrocarbon contaminants in said hydrocarbon-contaminated water are miscible and at which said fluid is liquid, whereby said hydrocarbon liquid is a single phase comprising said fluid and said hydrocarbon contaminants.

Preferred features of the method of the present invention are set out hereafter in claims 2 to 16.

The added fluid which comprises at least one hydrocarbon is hereinafter referred to simply as the "gas-fluid".

The method of the present invention will now be described with reference to the accompanying drawings, in which:
Fig. 1A is a schematic diagram of the equipment used in the conventional process;
Fig. 1B is a schematic diagram of equipment used in one embodiment of the process according to the present invention;
Fig. 1C is a schematic diagram of equipment used in a further embodiment of the process according to the invention;
Fig. 2 is a graph showing phase behaviour as a function of density and temperature for some fluids;
Fig. 3 is a graph showing the effect of methane on critical temperature and pressure;
Fig. 4 are graphs showing swelling of oil particles with and without ethane gas;
Fig. 5 is a graph showing relative changes in critical parameters as a function of gas-oil-ratio; and
Fig. 6 is a graph showing residual aromatic component concentration as a function of gas-fluid volume.

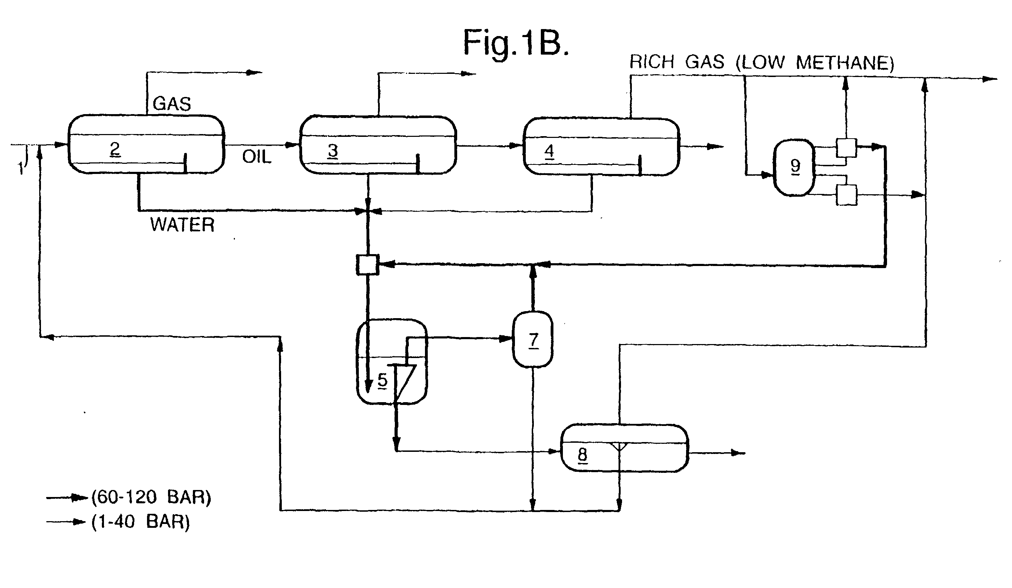

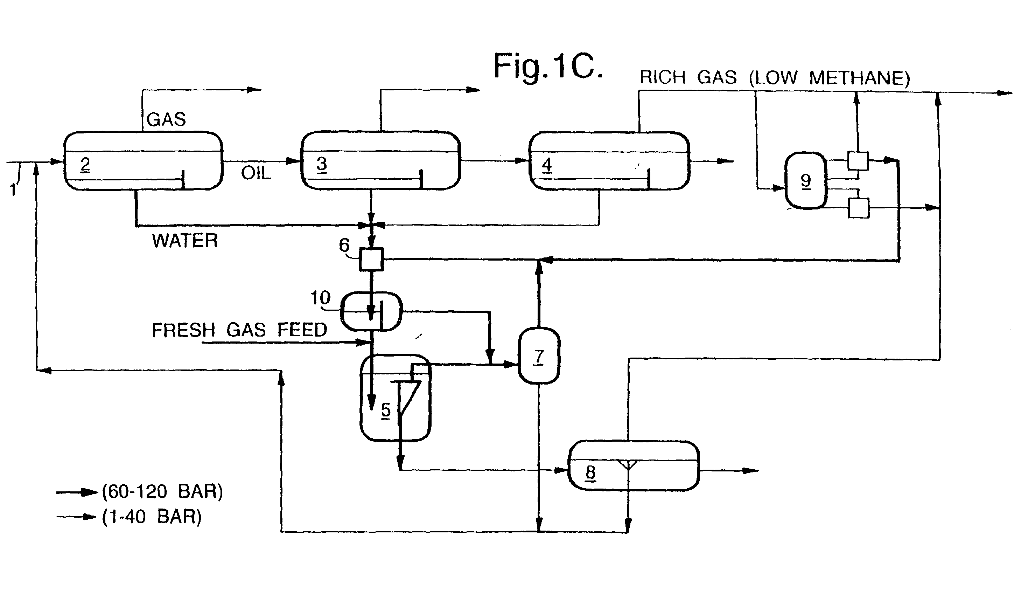

Referring to Figures 1A, 1B and 1C, feed line (1) leads from the wellhead to three three-phase separators 2, 3 and 4 arranged in series. The separated water phase from these separators is fed directly (Figure 1A) or indirectly (Figure 1B and 1C) to a hydrocyclone (5). (In Figure 1C, the water phase is passed via a decanter (10) to the hydrocyclone (5).) One liquid phase from the hydrocyclone (5) is fed to a flotation/degasser/mixer (6) (Figure 1A) or to a flotation/degasser (8) (Figures 1B and 1C). In Figures 1B and 1C, the other liquid phase from hydrocyclone (5) is fed to a flash drum (7). In Figures 1B and 1C, the gas phase from the third three-phase separator may be directed to reboiler (9) for an optional gas enrichment.

### The Conventional Process

The main objective of offshore oil installations is to process the product stream from the underground reservoir into three separate streams, i.e. streams of oil, gas and water. Each stream has to meet certain purity specifications as set by regulatory agencies and by the market. To allow overboard discharge of the water, the residual oil content has to be less than 40 ppm as discussed above. The product stream, i.e. the crude oil, has to be de-gassed and de-watered as illustrated in Fig. 1A. This is generally accomplished by flashing the oil stream (1) from the wellhead over three consecutive stages, at progressively lower pressures, in the first (2), second (3) and third (4) three-phase-separators. The gas composition at each stage becomes progressively richer (i.e. lower in methane content). The water stream from each separator is typically 10-30 000 m³/day and may contain 200-1000 ppm dispersed oil, 1-5 ppm BTX and less than 1 ppm of PAH-components. The water stream is driven by the wellhead pressure which could range from 30 to 100 bar with a temperature ranging from 60 to 110°C for North Sea processes. The water stream is fed into a battery of parallel hydrocyclones (5) with a unit capacity of 6 to 12 m³ per hour. The water stream from each separator is not normally merged as illustrated in Fig. 1A, but normally is processed individually. The oil removed at the hydrocyclone overflow could represent 1 to 3% of the water flow. The pressure drop over the hydrocyclone, inlet to overflow, could range from 5 to 30 bar depending on the hydrocyclone geometry and the flow conditions. The hydrocyclone underflow (i.e. the water outflow) has a residual oil concentration of 10 to 100 ppm and is de-pressurized and degassed in a degasser/flotation (6), which is integral to the operation of the water purification process. The individual purification steps represented by the three-phase separators, the hydrocyclones and the flotation cells are tuned such that the residual oil concentration in the final discharged water does not exceed a level of 40 ppm.

### The method of the present invention

With marginal modifications to the conventional systems, the method of the present invention (e.g. as illustrated schematically in Figure 1B) will improve the performance of standard, commercial hydrocyclones and also achieve the additional benefit of simultaneous extraction of aromatic components from the water phase.

This embodiment of the method according to the invention involves the following:
- Injection of excess natural gas relative to the oil-content in the water discharge stream from the gravity separators.
- The composition of the gas-fluid and the GOR (Gas-Oil-Ratio) are such as to lead to the formation of a single phase between the gas-fluid and the dispersed and dissolved hydrocarbons at the specific temperature and pressure conditions at the hydrocyclone overflow.
- The gas-fluid acts as a solvent for dissolved, aromatic hydrocarbons.
- The density of the dispersed oil particles is reduced.
- The particle diameter of the dispersed oil particles is increased.

The embodiment illustrated in Figure 1B is distinguished from the standard process illustrated in Figure 1A in that it might require a gas enrichment process (9) depending on the properties of the available gas-condensates or separator gases. A (static) mixer (6 in Figure 1C) is used to mix the gas-fluid into the water phase.

If a suitable gas-fluid is directly available from the process, the gas-fluid could be cycled back to the oil-mainstream. Alternatively, an estimated 95-99% of the gas-fluid could be recovered at the hydrocyclone overflow for recycling. If the gas-fluid is recycled, it should be stripped in a flash drum (7) prior to eventual recycling.

Additional improvements are achieved if the gas-fluid is injected in two stages as illustrated in Fig. 1C, where a majority of the gas-fluid is recovered by a gravity decanter upstream of the hydrocyclone. Additional fresh gas-fluid is subsequently injected and mixed into the hydrocyclone feed stream and recovered at the hydrocyclone overflow.

This process has the advantage of a two-step extraction process which is specifically suited for enhanced extraction of dissolved aromatic components.

Numerous patents and scientific publications exist on the topic of supercritical extraction and on hydrocyclone separation processes. However, no prior art has been identified which utilizes natural gas or multicomponent hydrocarbon gas-fluids to enhance the separation performance of liquid-liquid-hydrocyclones and/or to extract dissolved hydrocarbon contaminants from a water phase.

US Patent No. 4594164 and Norwegian Patent No. 167005 claim a method for separating dissolved material from a supercritical fluid by expanding the fluid over a pressure reduction valve such that the fluid goes into a two-phase region and looses its solvating power prior to entering a cyclone. The cyclone is subsequently used to harvest the precipitated solutes. This process has no resemblance to the method of the invention; in fact they are quite opposite, in that one is an extraction process performed in the one-phase-region while the other is a precipitation process performed in the two-phase-region of the fluid.

US Patent No. 4816165 relates to a flotation processes where a gas in the gaseous state is dissolved or dispersed in the gaseous phase to promote separation upon pressure reduction. The patent does thus not deal with the same subject matter as the present invention. More particularly, claims 1 and 4 of US Patent No. 4816165 are directed to flotation processes which are based upon dissolving and dispersing a gas into the water stream and using the inherent pressure drop in a standard hydrocyclone to promote the formation of gas bubbles internally in the hydrocyclone. These bubbles are alleged to promote separation of the lighter components to the hydrocyclone overflow. In column 3, lines 18-22, US Patent No. 4816165 further describes that the gas can either be completely dissolved or be dispersed as bubbles. at lines 37-51 it is further stated that the gas can be air or hydrocarbon gases.

In contrast, in the method of the present invention, when a hydrocyclone is used, the hydrocyclone efficiency is improved when the gas-fluid is mixed with the water upstream of the hydrocyclone under conditions such that the gas-fluid is maintained as a single liquid phase at the hydrocyclone overflow.

### Gas-fluid Properties

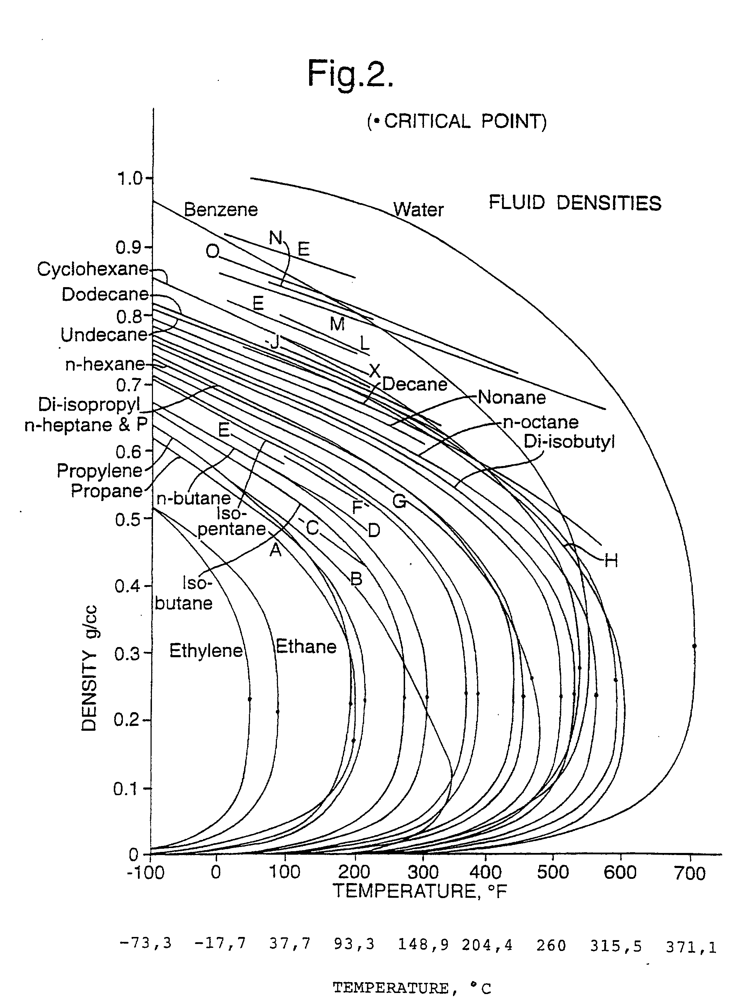

The required properties are generally found near the critical point of the gas-fluid. At pressure and temperature conditions at or above the critical point, the gas-fluid exhibits both liquid- and gas-like properties, posessing the solvating power of an organic solvent and the viscosity and diffusivity of a gas. The density of aliphatic hydrocarbon compounds at the critical point is approximately 0.25 g/cm³, as illustrated in Figure 2.

The critical point of a multicomponent hydrocarbon mixture is greatly influenced by its composition and is very sensitive to the concentration of "lean" components, such as methane and nitrogen. A high consentration of "lean" components tends to bring the critical point of the mixture towards sub-zero temperatures and high pressures both of which are unfavorable.

The fundamental principles governing miscibility between oil and gases are well established and are used routinely by the oil industry in PVT-labs (Pressure, Volume, Temperature) and also for improved oil recovery gas gas flooding of reservoirs (see Novasad Z. "On the Aspects of Reservoir Fluid Phase Behavior Important in Design of Miscible Gas Injection Processes", 6th IOR Symposium, Stavanger, Norway, 269-276 (1991)).

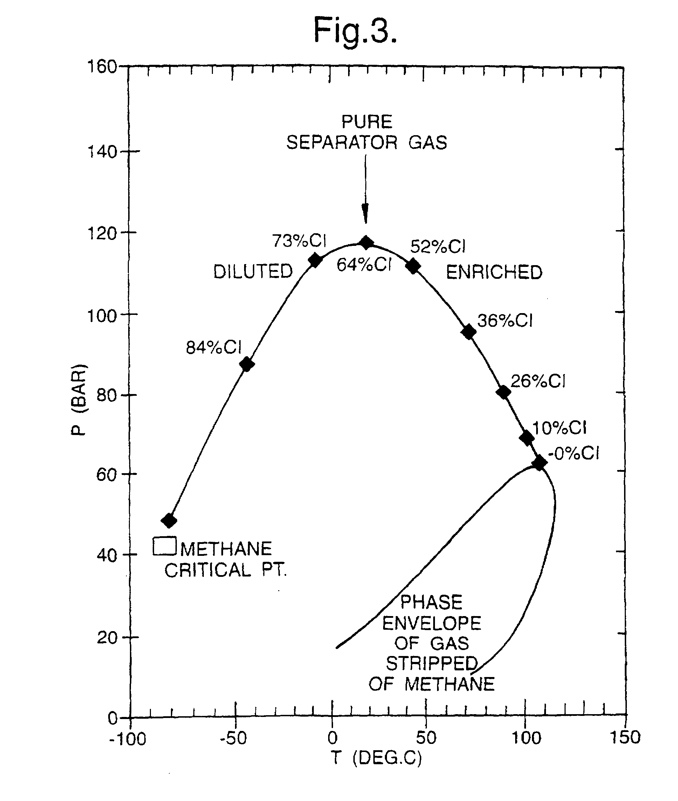

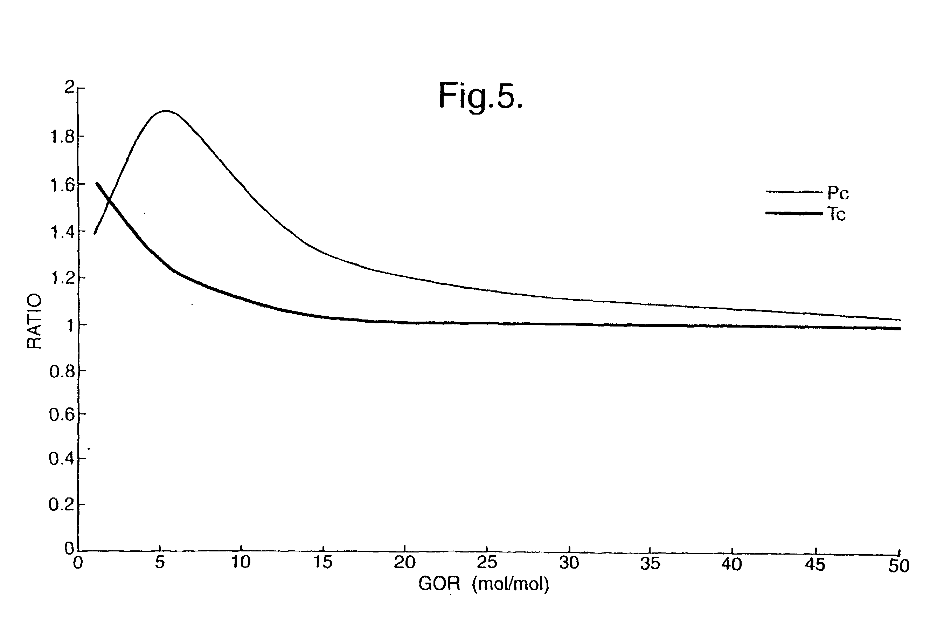

Algorithms for the prediction of the critical point, phase behavior and miscibility parameters of oil and gas mixtures are available. Several commercial computerized systems for the calculation of these parameters are available to the oil industry. All results presented in Figures 3 and 5 are derived from a computerized PVT-simulation based on the Peng-Robinson Equation of State (EOS).

The conditions yielding the lowest fluid density for increased hydrocyclone efficiency, are found close to the critical point, outside the phase envelope, the conditions for best extraction efficiency of aromatic components is exhibited in the one-phase-region, often referred to as the "near critical region", where T=85-97% Tc and P >90% Pc. (T expressed in °K and Pc and Tc represents the respective pressure and temperature conditions at the critical point).

The term "gas-fluid" is used hereinafter for gas which meets these criteria.

The most sensitive parameter influencing the successful application of the process is the composition of the gas-fluid. The first stage separator gas of most North Sea reservoirs is generally high in methane (75 to 85 Mol%) which will require sub-zero temperatures to achieve full miscibility between the gas-fluid and oil fractions. The gas is generally enriched in the second and third stage separators. The effect of methane on the critical parameters for a 12-component, second stage separator gas is illustrated in Figure 3. It is apparent from Figure 3 that some degree of enrichment (methane stripping) of the gas is required in order to be in the one-phase, near-critical region at the specific temperature and pressure of produced water, which is typically 30-100 bar and 60-110°C for North Sea processes.

The appropriate processes for methane stripping (gas enrichment), such as distillation and/or flashing, are well established and easily implemented by those skilled in the art.

The method of the invention will now be illustrated further by the following Examples.

### Example 1: Hydrocyclone performance

If the produced water is at, for example 80°C and 75 bar, it is apparent from Figure 3 that this particular gas has to be enriched to approximately 10% methane to yield a critical point of for example 60 bar and 100°C. This will allow for a 15 bar pressure drop in the hydrocyclone overflow and consequently prevent the formation of two-phases (gas bubbling) at the overflow.

In order to maintain one single phase when the dispersed oil and the gas-fluid are intermixed, an excess of gas-fluid is used. This is illustrated in Figure 5 where the resulting changes in critical temperature and pressure, expressed relative to the critical values of the original gas, are plotted against the molar gas-oil-ratio (GOR). It is apparent from Figure 5 that a low GOR will result in a dramatic increase in the temperature and pressure requirements in order for the recombined fluid to stay in the one-phase region. At higher GOR's the pressure and temperature will approach the critical value for the pure gas-fluid, as it was before it was recombined with the oil. For practical purposes, a GOR in excess of 25 seems feasible.

A material balance based on a GOR of 25 will result in a gas requirement of 3.3 St.m³ gas per kg dispersed oil. In practical terms, 3.3 St.m³ gas is required per m³ produced water if the residual oil level is 1000 ppm in the water stream fed from the upstream separator.

Recycling a fraction of the gas-fluid will reduce the feed requirement accordingly.

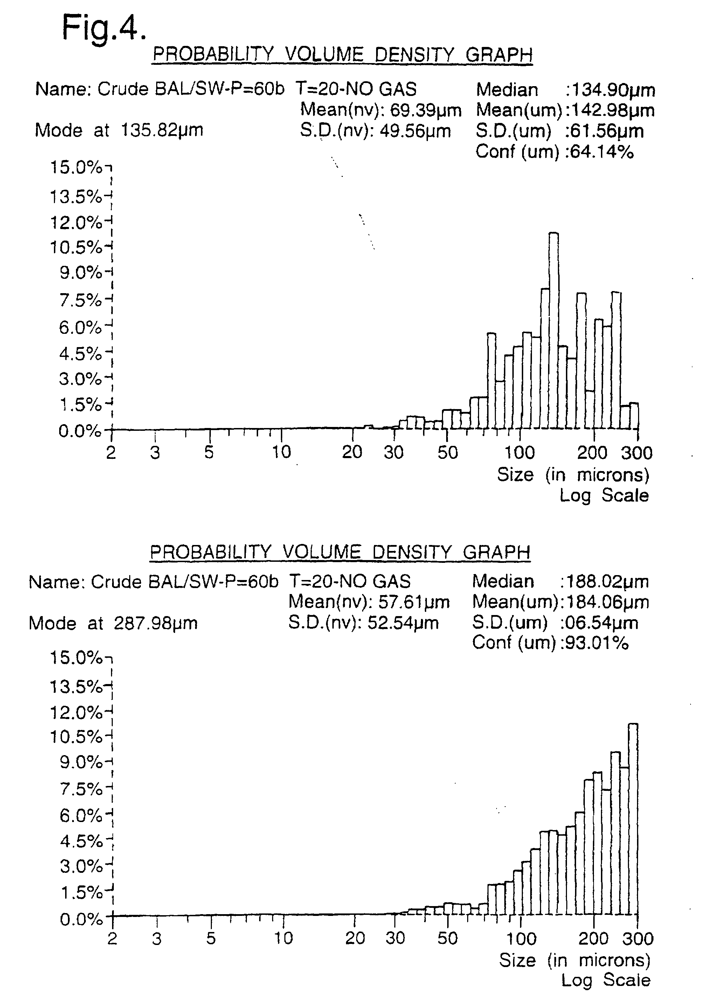

An estimate of the potential improvement in hydrocyclone separation efficiency indicates that the increased density difference alone contributes up to 350% improvement in particle cut-off (migration probability), as determined by the algorithms presented by Coleman et al. (supra). Additional capacity benefits are achieved because the gas-fluid "swells" the dispersed oil particles. Bench tests have indicated that the oil-particles coalesce with "gas-fluid-particles". For a GOR of 25, the resulting new particles have a density which approaches the density of the gas-fluid of approximately 0.3-0.5 g/cm³ depending on the temperature and pressure conditions and also double in diameter as illustrated in Figure 4. The particle distribution as illustrated in Figure 4 is determined by a Gallay-instrument (laser defraction) at 60 bar and 20°C, utilizing ethane as "gas-fluid" to swell the oil particles. It should be noted that the analytical range of the Gallay-instrument is 3-300 micrometer, hence part of the distribution curve fell outside this range when the oil particles were exposed to the ethane gas-fluid.

Stoke's Law states that the sedimentation rate is proportional to the density difference between the dispersed and continous phase and to the square of the particle diameter. Assuming Stoke's Law applies, the overall effect of the introduction of a gas-fluid is to increase the sedimentation rate by a factor up to 14 as compared to the conventional process. Such improvement in sedimentation rate will markedly improve the efficiency of hydrocyclones.

The optional introduction of a gas-fluid in the gravity (decanter) separation upstream of the hydrocyclone as illustrated in Figure 1C, will reduce the feed oil concentration to the hydrocyclone which will yield further improvement, since it is well recognized that a low oil concentration in the feed generally results in lower oil discharge concentrations (see Hadfield D.A. and Rube S. "Hydrocyclones in Large-Scale Marine Spill Cleanup", OTC #6504, Houston, Tx, 39-46 (1991) and Simins K.M. et al, "Testing the Vortoil Deoiling Hydrocyclone Using Canadian offshore Crude Oil", The 4th international Conference on Hydrocyclones, Southampton, (1992)).

### Example 2: Extraction of Aromatic Components

The conditions for optimum extraction of the aromatic components are determined by the respective components' solubility ratios at equilibrium (K-value) and by the respective mass transfer rates of the components from the water into the gas-fluid phase.

K-values for a series of aromatic components, expressed as m³ water per Standard m³ gas (m³/St m³) at 75 bar and 70°C, are listed in Table 1 for a propane-water mixture. The data are derived by utilizing the thermodynamic simulator, PROLI, from Simulation Sciences Inc. (USA).

**Table 1**

| K-values (water/propane) for Aromatic Components at 75 bar and 70°C | |
|---|---|
| **Component** | **K-value (m**^{**3**}**/st m**^{**3**}**)** |
| Benzene | 0.66 |
| Toluene | 1.53 |
| Xylene | 3.80 |
| Biphenyl | 4.52 |
| Anthracene | 27.50 |
| Pyrene | 24.75 |
| Naphthalene | 29.12 |
| Phenanthrene | 27.50 |

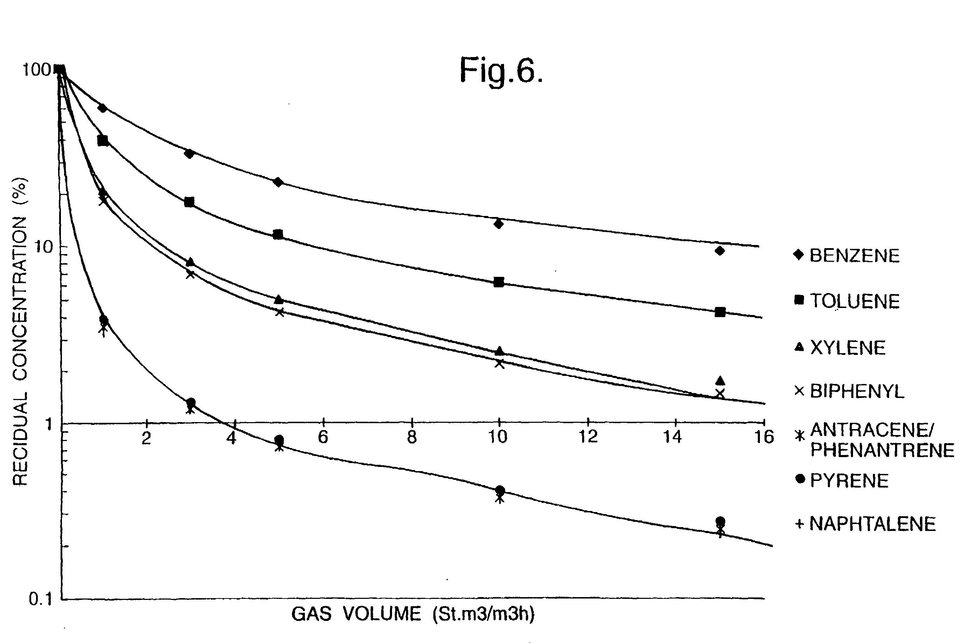

The K-values of Table 1 were used to calculate the extraction efficiency as a function of gas flow by performing a simple material balance at equilibrium. The results are illustrated in Figure 6.

Figure 6 illustrates the extraction efficiency, at one equilibrium stage, of the respective aromatic components in Table 1, as a function of gas flow. It is apparent from Figure 6 that a gas flow of 3.3 St m²/m³ as determined for "swelling" of dispersed hydrocarbons in Example 1 above, will also extract up to 99% of the polyaromatic components (PAH) (anthracene, pyrene, phenanthrene and naphthalene) and also a significant, but lesser amount of the lighter aromatic components such as biphenyl, xylene, toluene and benzene.

It should be noted that the above extraction efficiencies are the result of a one stage extraction of dissolved aromatic components: This extraction is performed simultaneously with the proposed "swelling" of dispersed oil particles which yields improvement in hydrocyclone performance.

An eventual increase in efficiency beyond the yield of a one-stage extraction, could be achieved by conducting a decanter extraction upstream of the hydrocyclone as illustrated in Figure 1C, followed by the injection and mixing of a fresh gas-fluid into the water, prior to entering the hydrocyclone.

## Claims

1. A method of separating dissolved and dispersed hydrocarbon contaminants in hydrocarbon-contaminated water, which method comprises the steps of: mixing into a stream of hydrocarbon-contaminated water a fluid comprising at least one hydrocarbon and having an average molecular weight of 30 to 72 g/mole; allowing said water and said fluid to separate in a liquid-liquid separator; and removing from said separator an aqueous liquid and a hydrocarbon liquid, said aqueous liquid being more dense than said hydrocarbon liquid; said method further comprising maintaining said water and said fluid within said separator at a temperature and a pressure at which said fluid and hydrocarbon contaminants in said hydrocarbon-contaminated water are miscible and at which said fluid is liquid, whereby said hydrocarbon liquid is a single phase comprising said fluid and said hydrocarbon contaminants.

2. A method as claimed in claim 1 wherein said fluid comprises a mixture of hydrocarbons.

3. A method as claimed in either of claims 1 and 2 wherein said fluid comprises less than 64 mole % methane.

4. A method as claimed in any one of the preceding claims wherein said fluid is mixed with said hydrocarbon-contaminated water stream in an amount of at least 3.3 St m³ fluid/m³ hydrocarbon-contaminated water.

5. A method as claimed in any one of the preceding claims wherein said fluid is mixed with said hydrocarbon-contaminated water stream in an amount of at least 3.3 St m³ fluid/kg contaminant.

6. A method as claimed in any one of the preceding claims wherein said fluid is mixed with said hydrocarbon-contaminated water stream in an amount of at least 25 moles fluid per mole contaminant.

7. A method as claimed in any one of the preceding claims wherein said hydrocarbon-contaminated water stream has a temperature of 60 to 110 °C.

8. A method as claimed in claim 7 wherein said hydrocarbon-contaminated water stream has a pressure of 30 to 100 bar.

9. A method as claimed in any one of the preceding claims wherein said separator is a hydrocyclone.

10. A method as claimed in any one of claims 1 to 8 wherein said separator is a gravity separator.

11. A method as claimed in any one of the preceding claims wherein the steps of said method are repeated using said separated aqueous liquid as said stream of hydrocarbon-contaminated water for the repetition.

12. A method as claimed in claim 11 wherein the separator initially used is a gravity separator and the separator subsequently used is a hydrocyclone.

13. A method as claimed in claim 11 wherein the separator initially used is a hydrocyclone and the separator subsequently used is a gravity separator.

14. A method as claimed in any one of the preceding claims wherein said hydrocarbon-contaminated water is produced water.

15. A method as claimed in any one of the preceding claims wherein said stream of hydrocarbon-contaminated water and said fluid both derive from the product stream of an underground oil reservoir which is separated into gas, oil and water streams, said stream of hydrocarbon-contaminated water deriving from said water stream and said fluid being obtained from said gas stream.

16. A method as claimed in claim 15 wherein gas from said gas stream is depleted in methane in the production of said fluid.

## Patentansprüche

1. Verfahren zum Trennen von gelösten und dispergierten Kohlenwasserstoff-Kontaminanten in mit Kohlenwasserstoffen kontaminiertem Wasser, wobei das Verfahren die folgenden Schritte umfaßt: Mischen eines Fluids, das mindestens einen Kohlenwasserstoff und ein mittleres Molekulargewicht von 30 bis 72 g/mol aufweist, in einen Strom von mit Kohlenwasserstoffen kontaminiertem Wasser, Trennen des Wassers und des Fluids in einem Flüssig-Flüssig-Separator und Entfernen einer wäßrigen Flüssigkeit und einer Kohlenwasserstoffflüssigkeit aus dem Separator, wobei die wäßrige Flüssigkeit dichter als die Kohlenwasserstoffflüssigkeit ist, wobei das Verfahren ferner das Aufrechterhalten des Wassers und des Fluids in dem Separator bei einer Temperatur und einem Druck umfaßt, bei der bzw. dem das Fluid und die Kohlenwasserstoff-Kontaminanten in dem mit Kohlenwasserstoffen kontaminierten Wasser mischbar sind, und bei der bzw. dem das Fluid flüssig ist, wodurch die Kohlenwsserstoffflüssigkeit eine Einzelphase ist, die das Fluid und die Kohlenwasserstoff-Kontaminanten aufweist.

2. Verfahren nach Anspruch 1, wobei das Fluid eine Mischung aus Kohlenwasserstoffen aufweist.

3. Verfahren nach Anspruch 1 oder 2, wobei das Fluid mindestens 64 Mol-% Methan aufweist.

4. Verfahren nach einem der vorstehenden Ansprüche, wobei das Fluid mit dem mit Kohlenwasserstoffen-kontaminierten Wasserstrom in einer Menge von mindestens 3,3 St m³ Fluid/m³ Kohlenwasserstoff-kontaminiertes Wasser gemischt wird.

5. Verfahren nach einem der vorstehenden Ansprüche, wobei das Fluid mit dem mit Kohlenwasserstoffen-kontaminierten Wasserstrom in einer Menge von mindestens 3,3 St m³ Fluid/kg Kontaminanten gemischt wird.

6. Verfahren nach einem der vorstehenden Ansprüche, wobei das Fluid mit dem mit Kohlenwasserstoffen kontaminierten Wasserstrom in einer Menge von mindestens 25 mol Fluid pro mol Kontaminanten gemischt wird.

7. Verfahren nach einem der vorstehenden Ansprüche, wobei der mit Kohlenwasserstoffen kontaminierte Wasserstrom eine Temperatur von 60 bis 110 °C aufweist.

8. Verfahren nach Anspruch 7, wobei der mit Kohlenwasserstoffen kontaminierte Wasserstrom einen Druck von 30 bis 100 bar aufweist.

9. Verfahren nach einem der vorstehenden Ansprüche, wobei der Separator ein Hydrozyklon ist.

10. Verfahren nach einem der Ansprüche 1 bis 8, wobei der Separator ein Schwerkraftseparator ist.

11. Verfahren nach einem der vorstehenden Ansprüche, wobei die Schritte des Verfahrens unter Verwendung der abgetrennten wäßrigen Flüssigkeit als mit Kohlenwasserstoffen kontaminierter Wasserstrom bei der Wiederholung wiederholt werden.

12. Verfahren nach Anspruch 11, wobei der anfänglich verwendete Separator ein Schwerkraftseparator und der nachfolgend verwendete Separator ein Hydrozyklon ist.

13. Verfahren nach Anspruch 11, wobei der anfänglich verwendete Separator ein Hydrozyklon und der nachfolgend verwendete Separator ein Schwerkraftseparator ist.

14. Verfahren nach einem der vorstehenden Ansprüche, wobei das mit Kohlenwasserstoffen kontaminierte Wasser synthetisches bzw. hergestelltes Wasser ist.

15. Verfahren nach einem der vorstehenden Ansprüche, wobei der mit Kohlenwasserstoffen kontaminierte Wasserstrom und das Fluid beide aus dem Produktstrom eines unterirdischen Ölreservoirs stammen, der in Gas-, Öl- und Wasserströme getrennt ist, wobei der mit Kohlenwasserstoffen kontaminierte Wasserstrom aus dem Wasserstrom abgeleitet wird und das Fluid aus dem Gasstrom erhalten wird.

16. Verfahren nach Anspruch 15, wobei das Gas aus dem Gasstrom bei der Herstellung des Fluids an Methan abgereichert wird.

## Revendications

1. Procédé de séparation de contaminants hydrocarbonés dissous et dispersés dans de l'eau contaminée par des hydrocarbures, ledit procédé comprenant les étapes consistant à: mélanger dans un courant d'eau contaminée par des hydrocarbures un fluide contenant au moins un hydrocarbure et ayant une masse moléculaire moyenne de 30 à 72 g/mole; laisser ladite eau et ledit fluide se séparer dans un séparateur liquide - liquide; et retirer dudit séparateur un liquide aqueux et un liquide hydrocarboné, ledit liquide aqueux étant plus dense que ledit liquide hydrocarboné; ledit procédé comprenant en outre une étape constituant à maintenir ladite eau et ledit fluide présents au sein du séparateur à une température et sous une pression auxquelles ledit fluide et les contaminants hydrocarbonés présents dans ladite eau contaminée par des hydrocarbures sont miscibles et auxquelles ledit fluide est liquide, ce pourquoi ledit liquide hydrocarboné est une phase unique contenant ledit fluide et lesdits contaminants hydrocarbonés.

2. Procédé tel que revendiqué dans la revendication 1, dans lequel ledit fluide contient un mélange d'hydrocarbures.

3. Procédé tel que revendiqué dans l'une ou l'autre des revendications 1 ou 2, dans lequel ledit fluide contient moins de 64 % molaire de méthane.

4. Procédé tel que revendiqué dans l'une quelconque des revendications précédentes, dans lequel ledit fluide est mélangé avec ledit flux d'eau contaminée par des hydrocarbures, dans une quantité d'au moins 3,3 m³ standards de fluide / m³ d'eau contaminée par des hydrocarbures.

5. Procédé tel que revendiqué dans l'une quelconque des revendications précédentes, dans lequel ledit fluide est mélangé avec ledit flux d'eau contaminée par des hydrocarbures, dans une quantité d'au moins 3,3 m³ standards de fluide / kg de contaminant.

6. Procédé tel que revendiqué dans l'une quelconque des revendications précédentes, dans lequel ledit fluide est mélangé avec ledit flux d'eau contaminée par des hydrocarbures, dans une quantité d'au moins 25 moles de fluide par mole de contaminant.

7. Procédé tel que revendiqué dans l'une quelconque des revendications précédentes, dans lequel ledit flux d'eau contaminée par des hydrocarbures a une température comprise entre 60 et 110 °C.

8. Procédé tel que revendiqué dans la revendication 7, dans lequel ledit flux d'eau contaminée par des hydrocarbures a une pression comprise entre 30 et 100 bars.

9. Procédé tel que revendiqué dans l'une quelconque des revendications précédentes, dans lequel ledit séparateur est un hydrocyclone.

10. Procédé tel que revendiqué dans l'une quelconque des revendications 1 à 8, dans lequel ledit séparateur est un séparateur par gravité.

11. Procédé tel que revendiqué dans l'une quelconque des revendications précédentes, dans lequel les étapes dudit procédé sont répétées en utilisant, pour la réitération, ledit liquide aqueux séparé, au titre dudit flux d'eau contaminée par des hydrocarbures.

12. Procédé tel que revendiqué dans la revendication 11, dans lequel le séparateur initialement utilisé est un séparateur par gravité, et le séparateur utilisé par la suite est un hydrocyclone.

13. Procédé tel que revendiqué dans la revendication 11, dans lequel le séparateur initialement utilisé est un hydrocyclone, et le séparateur utilisé par la suite est un séparateur par gravité.

14. Procédé tel que revendiqué dans l'une quelconque des revendications précédentes, dans lequel ladite eau contaminée par des hydrocarbures est de l'eau de production.

15. Procédé tel que revendiqué dans l'une quelconque des revendications précédentes, dans lequel ledit flux d'eau contaminée par des hydrocarbures et ledit fluide dérivent tous les deux du flux de produits issu d'un réservoir de pétrole souterrain qui est séparé en des flux de gaz, de pétrole, et d'eau, ledit flux d'eau contaminée par des hydrocarbures dérivant dudit flux d'eau et ledit fluide étant obtenu à partir dudit flux de gaz.

16. Procédé tel que revendiqué dans la revendication 15, dans lequel le gaz issu dudit flux gazeux est appauvri en méthane lors de la production dudit flûide.
